# EUROPEAN PATENT APPLICATION

(11) **EP 4 546 547 A1**
(43) Date of publication of application: **30.04.2025**
(21) Application number: 24785092.8
(22) Date of filing: 27.03.2024
(51) Int. Cl.: H01M 50/502, H01M 50/566, H01M 50/591, H01M 50/211

(54) **BATTERY PACK**

(30) Priority: 07.04.2023 KR 20230046196
(71) Applicant: LG Energy Solution, Ltd., Seoul 07335 (KR)
(72) Inventor: JANG, Byung Do, Daejeon 34122 (KR); KIM, Min Gu, Daejeon 34122 (KR)
(74) Representative: Plasseraud IP
(86) International application number: PCT/KR2024/003805
(87) International publication number: WO 2024/210385

(57) **Abstract**

A battery pack may include a housing, first and second battery assemblies on the housing and each including a plurality of pouch type battery cells, and a bus bar assembly on the first and second battery assemblies. In addition, the bus bar assembly may include a bus bar frame configured to cover the first and second battery assemblies, and a plurality of inter-bus bars on the bus bar frame.

## Description

### [Technical Field]

The present invention relates to a battery pack. The present application claims the benefit of priority based on Korean Patent Application No. 10-2023-0046196, filed on April 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A trend in the development of technology for secondary batteries for mobility is an improvement in energy density and safety. Here, the energy density of a secondary battery is a value obtained by dividing a maximum level of electrical energy that the secondary battery may store by the mass of the secondary battery. A high energy density of the secondary battery is directly related to the driving efficiency and range of mobility, and thus various studies are being conducted to improve the energy density of secondary batteries.

### [Disclosure]

### [Technical Problem]

The present invention is directed to providing a battery pack with improved energy density.

### [Technical Solution]

Embodiments of the present invention may provide a battery pack. The battery pack may include a housing, first and second battery assemblies on the housing and each including a plurality of pouch type battery cells, and a bus bar assembly on the first and second battery assemblies, in which the bus bar assembly may include a bus bar frame configured to cover the first and second battery assemblies, and a plurality of inter-bus bars on the bus bar frame.

Each of the plurality of pouch type battery cells may include a pouch case, a positive electrode lead, and a negative electrode lead. In addition, the pouch case may include a first side facing the housing and a second side opposite the first side, the positive electrode lead and the negative electrode lead of each of the plurality of pouch type battery cells may be on the second side, and the positive electrode lead and the negative electrode lead of each of the plurality of pouch type battery cells may be connected to a corresponding one of the plurality of inter-bus bars.

The positive electrode lead and the negative electrode lead of each of the plurality of pouch type battery cells may be welded together with the corresponding one of the plurality of inter-bus bars.

The negative electrode lead of one of the plurality of pouch type battery cells may be in contact with an upper surface of the corresponding one of the plurality of inter-bus bars.

The bus bar frame may include a plurality of lead slots, and the positive electrode lead and the negative electrode lead of each of the plurality of pouch type battery cells may pass through a corresponding one of the plurality of lead slots.

The bus bar assembly may further include a fire-resistant sheet between the first and second battery assemblies and the bus bar frame.

The bus bar frame may include a plurality of holes, the fire-resistant sheet may include a plurality of cutting guides, and each of the plurality of cutting guides may overlap a corresponding one of the plurality of holes.

Another embodiment may provide a battery pack. The battery pack may include a housing, first to fourth battery assemblies on the housing, each of the first to fourth battery assemblies including a plurality of pouch type battery cells, a center beam between the first and second battery assemblies and the third and fourth battery assemblies, and a bus bar assembly on the first to fourth battery assemblies, in which the bus bar assembly may include a bus bar frame configured to cover the first to fourth battery assemblies.

The bus bar frame may cover the center beam.

Each of the plurality of pouch type battery cells may include a pouch case, a positive electrode lead, and a negative electrode lead, in which the pouch case may include a first side facing the housing and a second side opposite the first side, and the positive electrode lead and the negative electrode lead of each of the plurality of pouch type battery cells may be on the second side.

The bus bar assembly may further include a plurality of inter-bus bars on the bus bar frame, and the positive electrode lead and the negative electrode lead of each of the plurality of pouch type battery cells may be connected to a corresponding one of the plurality of inter-bus bars.

The positive electrode lead and the negative electrode lead of each of the plurality of pouch type battery cells may be welded together with the corresponding one of the plurality of inter-bus bars.

The positive electrode lead and the negative electrode lead of one of the plurality of pouch type battery cells may be spaced apart from each of the plurality of inter-bus bars.

The negative electrode lead of one of the plurality of pouch type battery cells may be in contact with upper surfaces of the plurality of inter-bus bars.

### [Advantageous Effects]

A battery pack according to example embodiments of the present invention includes a bus bar frame to cover a plurality of battery assemblies. Accordingly, the number of assembly processes decreases and the number of components to be assembled to manufacture a secondary battery decreases, thus reducing manufacturing costs of the secondary battery and improving the productivity of the secondary battery.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a perspective view for describing a battery pack according to example embodiments.
FIG. 2 is an exploded perspective view for describing a battery pack according to example embodiments.
FIG. 3 illustrates a pouch type battery cell of a battery pack.
FIG. 4 illustrates bus bar assemblies of a battery pack.
FIG. 5 is an enlarged partial plan view of a part of FIG. 1.
FIG. 6 is a cross-sectional view taken along line 5I-5I' of FIG. 5.
FIG. 7 is an enlarged partial cross-sectional view of a part of FIG. 6.
FIG. 8 is a perspective view for describing a battery pack according to example embodiments.
FIG. 9 is an exploded perspective view of the battery pack of FIG. 8.
FIG. 10 is an exploded perspective view of bus bar assemblies of FIG. 8.
FIG. 11 illustrates a part of the battery pack of FIG. 8 corresponding to FIG. 7.
FIG. 12 is a perspective view of a battery pack according to example embodiments.
FIG. 13 is an exploded perspective view of the battery pack of FIG. 12.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

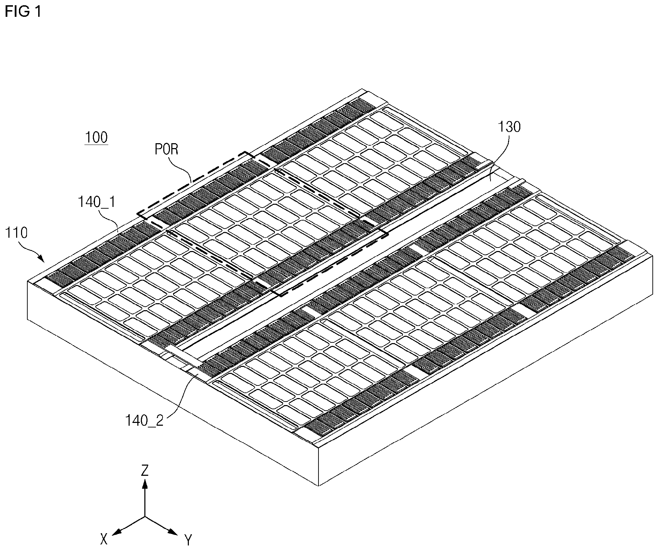

FIG. 1 is a perspective view for describing a battery pack 100 according to example embodiments.

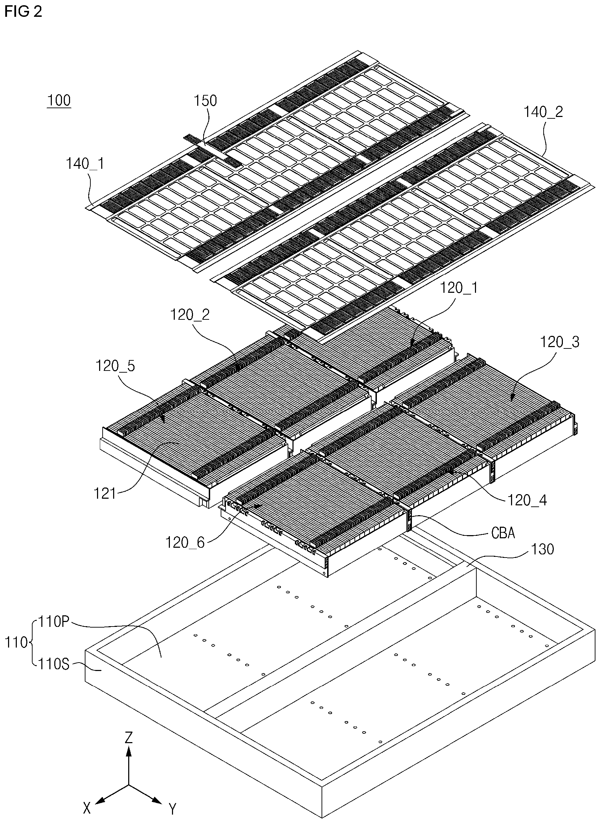

FIG. 2 is an exploded perspective view for describing the battery pack 100 according to example embodiments.

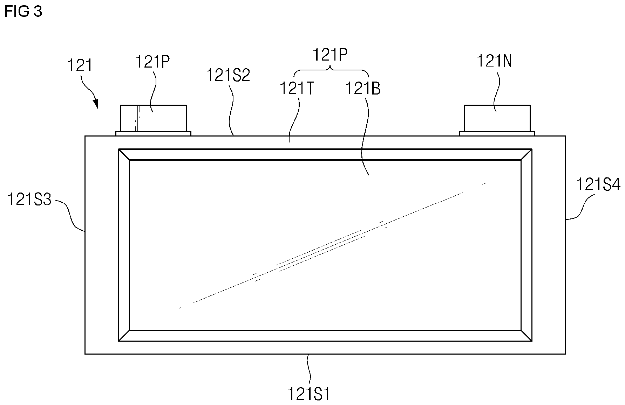

FIG. 3 is a side view of a pouch type battery cell 121.

Referring to FIGS. 1 to 3, the battery pack 100 includes a housing 110, a plurality of battery assemblies 120_1, 120_2, 120_3, 120_4, 120_5, and 120_6 (hereinafter, 120_1 to 120_6), a center beam 130, bus bar assemblies 140_1 and 140_2, and a cross bus bar 150. The battery pack 100 is a final form of a battery system mounted on a mobility or the like.

The housing 110 may provide a space in which the plurality of battery assemblies 120_1 to 120_6 are arranged. The housing 110 may include a support plate 110P and side walls 110S.

Two directions substantially parallel to the support plate 110P will be defined as an X-axis direction and a Y-axis direction, and a direction substantially perpendicular to the support plate 110P will be defined as a Z-axis direction. The X-axis direction, the Y-axis direction, and the Z-axis direction may be substantially perpendicular to one another. Unless otherwise mentioned, the definition of directions will apply to the following drawings. When the plurality of battery assemblies 120_1 to 120_6 are described, the X-axis direction, the Y-axis direction, and the Z-axis direction will be defined with respect to a case in which the plurality of battery assemblies 120_1 to 120_6 are arranged on the battery pack 100.

The support plate 110P may include a plurality of plates coupled to each other by friction stir welding. The support plate 110P may include a plurality of cooling channels that are flow paths of a cooling fluid. The support plate 110P may include a plurality of cavities, thus resulting in a reduction of the weight of the support plate 110P. Each of the plurality of cooling channels and the plurality of cavities may extend in the X-axis direction.

The side walls 110S may be coupled to the support plate 110P. The side walls 110S may extend in the Z-axis direction. The side walls 110S may each include an inner empty space and may thus be light in weight. Some of the side walls 110S may be substantially perpendicular to the Y-axis direction, and some of the side walls 110S may be substantially perpendicular to the X-axis direction.

The plurality of battery assemblies 120_1 to 120_6 may be on the support plate 110P of the housing 110. The support plate 110P may support the plurality of battery assemblies 120_1 to 120_6. The side walls 110S may horizontally surround the plurality of battery assemblies 120_1 to 120_6.

The plurality of battery assemblies 120_1 to 120_6 may include a plurality of pouch type battery cells 121, a first cross-beam 125a, and a second cross-beam 125b. The battery assembly 120_1 may be referred to as a first battery assembly, the battery assembly 120_2 may be referred to as a second battery assembly, the battery assembly 120_3 may be referred to as a third battery assembly, the battery assembly 120_4 may be referred to as a fourth battery assembly, the battery assembly 120_5 may be referred to as a fifth battery assembly, and the battery assembly 120_6 may be referred to as a sixth battery assembly.

According to example embodiments, the plurality of pouch type battery cells 121 may be connected in series and/or in parallel. For example, the plurality of pouch type battery cells 121 may be connected in series to each other. As another example, the plurality of pouch type battery cells 121 may be connected in parallel to each other. As another example, the plurality of pouch type battery cells 121 connected in parallel may form a plurality of banks together, and the plurality of banks may be connected in series to each other.

Each of the plurality of pouch type battery cells 121 may include an electrode assembly, an electrolyte, and a pouch case 121C.

The electrode assembly embedded in a battery case includes a positive electrode, a negative electrode, and a separator between the positive electrode and the negative electrode. The electrode assembly may be classified as a jelly-roll type electrode assembly or a stack type electrode assembly according to a form of assembly. A jelly roll type electrode assembly is manufactured by winding a positive electrode, a negative electrode, and a separator interposed therebetween. A stack type electrode assembly may include a plurality of positive electrodes and a plurality of negative electrodes that are stacked sequentially, and a plurality of separators interposed therebetween. The positive electrodes of the electrode assembly may be connected to a positive electrode lead 121P. The negative electrodes of the electrode assembly may be connected to a negative electrode lead 121N.

The pouch case 121C may include an accommodation part 121B and a terrace 121T. The accommodation part 121B may provide a space for storing the electrode assembly and thus may have a convex shape with respect to the terrace 121T. The terrace 121T may be a sealed portion of the pouch case 121C. The terrace 121T may surround the accommodation part 121B.

The pouch case 121C of each of the plurality of pouch type battery cells 121 may include first to fourth sides 121S1, 121S2, 121S3, and 121S4. The first side 121S1 of the pouch case 121C may face the support plate 110P of the housing 110. The second side 121S2 of the pouch case 121C may be opposite to the first side 121S1 of each of the plurality of pouch type battery cells 121. The third and fourth sides 121S3 and 121S4 of the pouch case 121C may connect the first and second sides 121S1 and 121S2 of the pouch case 121C.

According to example embodiments, each of the plurality of pouch type battery cells 121 may be a unidirectional cell. According to example embodiments, the positive electrode lead 121P and the negative electrode lead 121N of each of the plurality of pouch type battery cells 121 may be disposed in the same direction. According to example embodiments, the positive electrode lead 121P and the negative electrode lead 121N of each of the plurality of pouch type battery cells 121 may be on the second side 121S2 of the pouch case 121C of each of the plurality of pouch type battery cells 121. The positive electrode lead 121P and the negative electrode lead 121N may protrude from the second side 121S2 of the pouch case 121C. The positive electrode lead 121P and the negative electrode lead 121N may be spaced apart from each other in the Y-axis direction. The positive electrode lead 121P may be on one end of the second side 121S2 in the Y-axis direction, and the negative electrode lead 121N may be on another end of the second side 121S2 in the Y-axis direction.

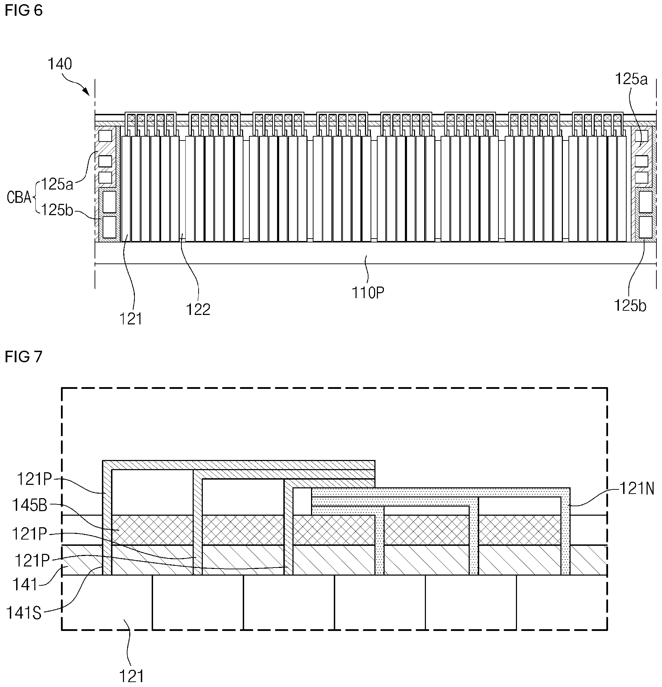

According to example embodiments, each of the plurality of battery assemblies 120_1 to 120_6 may further include a plurality of separators 122 (see FIG. 6) between the plurality of pouch type battery cells 121. The plurality of separators 122 (see FIG. 6) may horizontally support the plurality of pouch type battery cells 121 to prevent swelling of the plurality of pouch type battery cells 121. According to example embodiments, the plurality of separators 122 (see FIG. 6) may be thermal barriers. According to example embodiments, each of the plurality of separators 122 (see FIG. 6) may have a high melting temperature and a low thermal conductivity. According to example embodiments, each of the plurality of separators 122 (see FIG. 6) may include a flame retardant material such as a ceramic and a coated glass material. According to example embodiments, the plurality of separators 122 (see FIG. 6) may be configured to emit a fire retarding material and a fire extinguishing agent when a thermal runaway event occurs.

The first cross-beam 125a of each of the battery assemblies 120_1 and 120_6 on edges of the pack housing 110 may be coupled to a first support beam on the support plate 110P of the housing 110. The first cross-beam 125a and the first support beam may be fixed to the support plate 110P of the housing 110 by a mechanical means such as a bolt or the like.

The second cross-beam 125b of each of the battery assemblies 120_3 and 120_5 on the edges of the pack housing 110 may be coupled to a second support beam. The second support beam may be on the second cross-beam 125b. The second cross-beam 125b and the second support beam may be fixed to the support plate 110P of the housing 110 by a mechanical means such as a bolt or the like.

The first cross-beam 125a and the second cross-beam 125b of each of the plurality of battery assemblies 120_1 to 120_6 may be spaced apart from each other with the pouch type battery cells 121 interposed therebetween. The first cross-beam 125a and the second cross-beam 125b may horizontally cover the plurality of pouch type battery cells 121. The first cross-beam 125a and the second cross-beam 125b may be fixed to the plurality of pouch type battery cells 121 by an adhesive material or the like.

According to example embodiments, the first cross-beam 125a and the second cross-beam 125b may have different and complementary shapes. For example, the second cross-beam 125b of the battery assembly 120_2 may be coupled to the first cross-beam 125a of the battery assembly 120_3. The first cross-beam 125a and the second cross-beam 125b that are coupled to each other may form a cross-beam assembly CBA together. The first cross-beam 125a and the second cross-beam 125b of each cross-beam assembly CBA may be engaged with each other.

The center beam 130 may extend between side walls 110S perpendicular to the X-axis direction among the side walls 110S. The center beam 130 may extend in the X-axis direction. The center beam 130 may isolate the battery assemblies 120_1, 120_2, and 120_5 from the battery assemblies 120_3, 120_4, and 120_6. The center beam 130 may be interposed between the battery assemblies 120_1, 120_2, and 120_5 and the battery assemblies 120_3, 120_4, and 120_6.

Each of the bus bar assemblies 140_1 and 140_2 may extend in the X-axis direction. A length of each of the bus bar assemblies 140_1 and 140_2 in the X-axis direction may be greater than a length of each of the bus bar assemblies 140_1 and 140_2 in the Y-axis direction. The bus bar assemblies 140_1 and 140_2 may be spaced apart from each other in the Y-axis direction. The center beam 130 may be interposed between the bus bar assemblies 140_1 and 140_2 in the Y-axis direction. Each of the bus bar assemblies 140_1 and 140_2 may be spaced apart from the center beam 130 in a horizontal direction (e.g., in the Y-axis direction). Each of the bus bar assemblies 140_1 and 140_2 may not overlap the center beam 130 in the Z-axis direction.

Each of the bus bar assemblies 140_1 and 140_2 may cover some of the plurality of battery assemblies 120_1, 120_2, 120_3, 120_4, 120_5, and 120_6. Each of the bus bar assemblies 140_1 and 140_2 may be spaced apart from some of the plurality of battery assemblies 120_1, 120_2, 120_3, 120_4, 120_5, and 120_6.

The bus bar assembly 140_1 may be on the battery assemblies 120_1, 120_2, and 120_5. The bus bar assembly 140_1 may cover the battery assemblies 120_1, 120_2, and 120_5. The bus bar assembly 140_1 may overlap the battery assemblies 120_1, 120_2, and 120_5 in the Z-axis direction. The bus bar assembly 140_1 may not cover the battery assemblies 120_3, 120_4, and 120_6. The bus bar assembly 140_1 may be spaced apart from the battery assemblies 120_3, 120_4, and 120_6 in the horizontal direction (e.g., the Y-axis direction). The bus bar assembly 140_1 may not overlap the battery assemblies 120_3, 120_4, and 120_6 in the Z-axis direction.

The bus bar assembly 140_2 may be on the battery assemblies 120_3, 120_4, and 120_6. The bus bar assembly 140_2 may cover the battery assemblies 120_3, 120_4, and 120_6. The bus bar assembly 140_2 may overlap the battery assemblies 120_3, 120_4, and 120_6 in the Z-axis direction. The bus bar assembly 140_2 may not cover the battery assemblies 120_1, 120_2, and 120_5. The bus bar assembly 140_2 may be spaced apart from the battery assemblies 120_1, 120_2, and 120_5 in the horizontal direction (e.g., the Y-axis direction). The bus bar assembly 140_2 may not overlap the battery assemblies 120_1, 120_2, and 120_5 in the Z-axis direction.

In the present example, each of the two bus bar assemblies 140_1 and 140_2 spaced apart from each other in the Y-axis direction covers the battery assemblies 120_1, 120_2, 120_3, 120_4, 120_5, and 120_6 that are arranged in three columns in the X-axis direction and in two rows in the Y-axis direction, and thus, an array of the bus bar assemblies 140_1 and 140_2 and the battery assemblies 120_1, 120_2, 120_3, 120_4, 120_5, and 120_6 may be referred to as a 3*2 array. Based on the above description, technicians of ordinary skill in the art will be able to easily derive the bus bar assemblies 140_1 and 140_2 and the plurality of battery assemblies 120_1 to 120_6 that are arranged in the M*N array. Here, M and N are each an integer of 2 or more.

The battery pack 100 may further include electronic components. The electronic components may include an electronic device required to drive the battery pack 100.

The electronic components may include, for example, a battery management system (BMS). The BMS may be configured to monitor, balance, and control the battery pack 100. The monitoring of the battery pack 100 may include measuring voltages and currents of certain nodes inside the plurality of battery assemblies 120_1 to 120_6 and measuring temperatures at set positions in the battery pack 100. The battery pack 100 may include measuring instruments for measuring voltages, currents, and temperatures as described above.

The balancing of the battery pack 100 is an operation of reducing a deviation between the plurality of battery assemblies 120_1 to 120_6. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery assemblies 120_1 to 120_6 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 120_1 to 120_6. The PRA may be configured to supply or cut off power from a high-voltage battery to an external load (e.g., a motor of a vehicle). The PRA may cut off power supply to an external load (e.g., a motor of a vehicle) to protect the plurality of battery assemblies 120_1 to 120_6 and an external load (e.g., a motor of a vehicle), when abnormal voltage such as voltage surges occurs.

The battery pack 100 may further include a lead plate coupled to the side walls 110S. The lead plate may cover elements inside the battery pack 100 such as the battery assemblies 120_1 to 120_6 and electronic components. The lead plate may be fixed to the side walls 110S by a mechanical means, e.g., a bolt.

The battery pack 100 may further include a plurality of exhaust devices. The plurality of exhaust devices may be installed on the lead plate or the side walls 110S. The plurality of exhaust devices may provide a path for discharging a high-temperature gas from the inside of the battery pack 100 to the outside when a thermal runaway event occurs in some of the plurality of battery assemblies 120_1 to 120_6. Accordingly, thermal propagation may be delayed, and the stability of the battery pack 100 may be improved.

Here, the thermal runaway state of the plurality of battery assemblies 120_1 to 120_6 is a state in which a change of temperature of the plurality of battery assemblies 120_1 to 120_6 accelerates the change of temperature, i.e., an uncontrollable positive feedback. The temperature of the plurality of battery assemblies 120_1 to 120_6 that are in the thermal runaway state sharply increases, and a large amount of high-pressure gas and combustion debris are discharged.

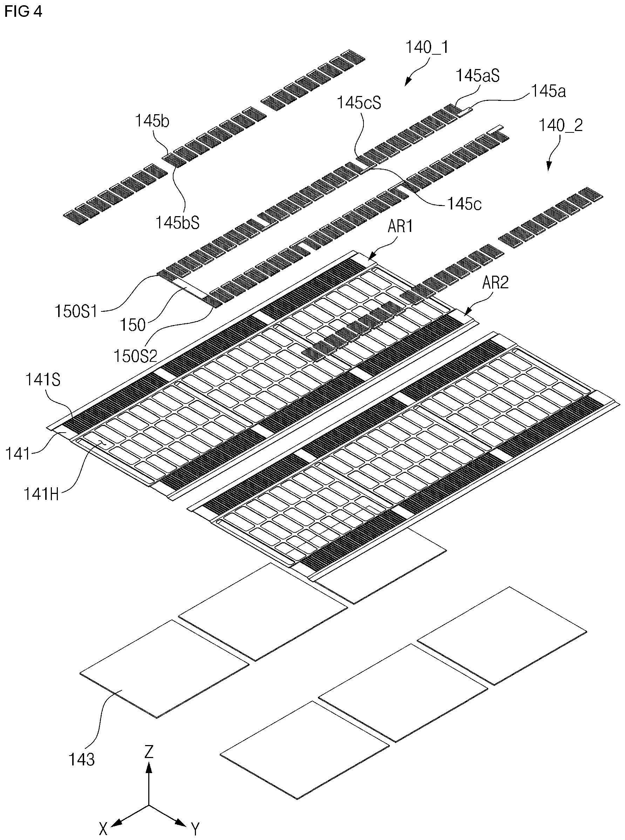

FIG. 4 is an exploded perspective view of the bus bar assemblies 140_1 and 140_2 according to example embodiments.

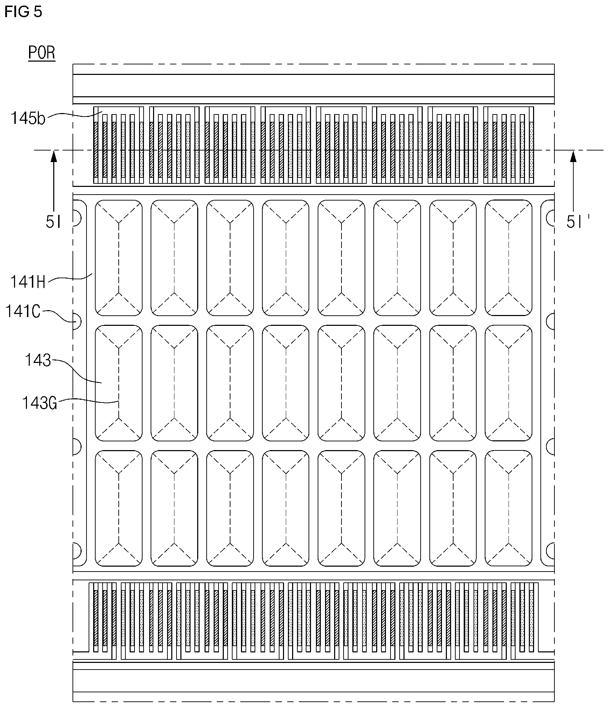

FIG. 5 is an enlarged partial plan view of a part POR of FIG. 1.

FIG. 6 is a cross-sectional view taken along line 5I-5I' of FIG. 5.

FIG. 7 is an enlarged partial cross-sectional view of a part of FIG. 6.

Referring to FIGS. 2 and 4 to 7, each of the bus bar assemblies 140_1 and 140_2 may include a bus bar frame 141, a plurality of fire-resistant sheets 143, and a plurality of inter-bus bars 145a, 145b, and 145c.

The bus bar frame 141 of each of the bus bar assemblies 140_1 and 140_2 may include an insulating material. The bus bar frame 141 of each of the bus bar assemblies 140_1 and 140_2 may extend in the X-axis direction. The bus bar frame 141 of each of the bus bar assemblies 140_1 and 140_2 may include a plurality of holes 141H and a plurality of slots 141S. The bus bar frame 141 of each of the bus bar assemblies 140_1 and 140_2 may further include coupling holes 141C for coupling to the cross-beam assemblies CBA. For example, a mechanical coupling means such as a long bolt may pass through the cross-beam assemblies CBA through the coupling holes 141C and be coupled to the support plate 110P of the housing 110.

The positive electrode lead 121P and the negative electrode lead 121N of each of the plurality of pouch type battery cells 121 may pass through a corresponding slot 141S of the plurality of slots 141S. Accordingly, the bus bar frame 141 of each of the bus bar assemblies 140_1 and 140_2 may horizontally support and protect the positive electrode lead 121P and the negative electrode lead 121N of each of the plurality of pouch type battery cells 121. A length of each of the plurality of slots 141S in the Y-axis direction may be greater than a length of each of the plurality of slots 141S in the X-axis direction.

The plurality of slots 141S may form a first slot array AR1 and a second slot array AR2. That is, each of the first slot array AR1 and the second slot array AR2 may include a plurality of slots 141S arranged in the X-axis direction. The first slot array AR1 may be parallel to the X-axis direction and be on an edge of the bus bar frame 141 adjacent to the side wall 110S. The second slot array AR2 may be parallel to the X-axis direction and be on an edge of the bus bar frame 141 adjacent to the center beam 130.

Accordingly, one of the positive electrode lead 121P and the negative electrode lead 121N of each of the plurality of pouch type battery cells 121 may pass through the slot 141S of the first slot array AR1, and the other may pass through the slot 141S of the second slot array AR2. For example, when the positive electrode lead 121P of the pouch type battery cell 121 passes through the slot 141S of the first slot array AR1, the negative electrode lead 121N of the pouch type battery cell 121 may pass through the slot 141S of the second slot array AR2.

There may be a plurality of holes 141H between the first slot array AR1 and the second slot array AR2. The first slot array AR1 and the second slot array AR2 may be spaced apart from each other with the plurality of holes 141H interposed therebetween. The plurality of holes 141H may provide a path for exhausting a high-temperature gas when a thermal runaway event occurs in the battery pack 100. An area of each of the plurality of holes 141H may be greater than an area of each of the plurality of slots 141S, because each of the plurality of slots 141S allows one of the positive electrode lead 121P and the negative electrode lead 121N each having a thin thickness to pass therethrough, and the plurality of holes 141H allows a high-temperature gas to be exhausted therethrough.

The plurality of fire-resistant sheets 143 may be interposed between the plurality of pouch type battery cells 121 and the bus bar frame 141. As a non-limiting example, each of the plurality of fire-resistant sheets 143 may correspond to one of the plurality of battery assemblies 120_1 to 120_6. That is, each of the plurality of fire-resistant sheets 143 may have an area substantially the same as that of one of the plurality of battery assemblies 120_1 to 120_6, and cover a corresponding one of the plurality of battery assemblies 120_1 to 120_6.

Technicians of ordinary skill in the art will be able to easily derive an embodiment in which some of the plurality of fire-resistant sheets 143 cover two or more of the plurality of battery assemblies 120_1 to 120_6 or two or more of the fire-resistant sheets 143 cover one of the plurality of battery assemblies 120_1 to 120_6.

The plurality of fire-resistant sheets 143 may overlap the plurality of holes 141H. The plurality of fire-resistant sheets 143 may not overlap the first slot array AR1 and the second slot array AR2. The plurality of fire-resistant sheets 143 may be spaced apart from each of the first slot array AR1 and the second slot array AR2 in the horizontal direction (e.g., the Y-axis direction). The plurality of fire-resistant sheets 143 may be interposed between the first slot array AR1 and the second slot array AR2.

According to example embodiments, the plurality of fire-resistant sheets 143 may include, for example, a fire-resistant material such as mica. Each of the plurality of fire-resistant sheets 143 may include a plurality of cutting guides 143G. Each of the plurality of cutting guides 143G may overlap a corresponding one of the plurality of holes 141H of the bus bar frame 141 in the Z-axis direction. The plurality of cutting guides 143G may be formed by, for example, non-cutting processing of the plurality of refractory sheets 143 using a knife or the like. Due to the plurality of cutting guides 143G, when a thermal runaway event occurs, portions of the plurality of fire-resistant sheets 143 at which the plurality of cutting guides 143G are formed may be easily broken and thus a generated high-temperature gas may be discharged from the plurality of battery assemblies 120_1 to 120_6 through the plurality of holes 141H.

The plurality of inter-busbars 145a, 145b, and 145c may be on the bus bar frame 141. The plurality of inter-bus bars 145a, 145b, and 145c may include a conductive material such as a metal. As a non-limiting example, the inter-bus bars 145a may have a roughly 'L' shape, the inter-bus bars 145b may have a roughly 'I' shape, and the inter-bus bars 145c may have a roughly 'C' shape.

Each of the inter-bus bars 145a may include a slot 145aS, each of the inter-bus bars 145b may include a slot 145bS, and each of the inter-bus bars 145c may include a slot 145cS. Due to the slots 145aS, 145bS, and 145cS, each of the plurality of inter-bus bars 145a, 145b, and 145c may have a comb shape. The positive electrode lead 121P and the negative electrode lead 121N of each of the plurality of pouch type battery cells 121 passing through a corresponding one of the plurality of slots 141S may pass through a corresponding one of the slots 145aS, 145bS, and 145cS.

The inter-bus bars 145a may be external connection terminals for deriving voltages of plurality of battery assemblies 120_1 to 120_6. Positive potentials of the plurality of battery assemblies 120_1 to 120_6 may be output to one of the inter-bus bars 145a, and negative potentials of the plurality of battery assemblies 120_1 to 120_6 may be output to the other inter-bus bars 145a. One of the inter-busbars 145a may be in contact with the positive electrode leads 121P, and the other inter-bus bar 145a may be in contact with the negative electrode leads 121N.

The inter-bus bars 145b may not overlap the cross-beam assemblies CBA in the Z-axis direction. The inter-bus bars 145b may be spaced apart from the cross-beam assemblies CBA in the horizontal direction (e.g., the Y-axis direction). Accordingly, the inter-bus bars 145b may be in contact with the positive electrode leads 121P and the negative electrode leads 121N.

The inter-bus bars 145c may overlap the cross-beam assemblies CBA in the Z-axis direction. Accordingly, the distances between the positive electrode leads 121P and the negative electrode leads 121N that are in contact with the inter-bus bars 145b may be relatively large. Accordingly, each of the inter-bus bars 145b may include comb-shaped portions spaced apart from each other and a bridge connecting the comb-shaped portions.

The plurality of inter-bus bars 145a, 145b, and 145c may be welded to the positive electrode leads 121P and the negative electrode leads 121N. Accordingly, the reliability of an electrical and mechanical connection between the plurality of inter-bus bars 145a, 145b, and 145c, the positive electrode leads 121P, and the negative electrode leads 121N may improve.

The cross bus bar 150 may be on the bus bar assemblies 140_1 and 140_2. The cross bus bar 150 may overlap the bus bar assemblies 140_1 and 140_2 in the Z-axis direction. The cross bus bar 150 may overlap the center beam 130 in the Z-axis direction. The cross bus bar 150 may have a roughly line shape. The cross bus bar 150 may include slots 150S1 overlapping the bus bar assembly 140_1 and slots 150S2 overlapping the bus bar assembly 140_2. The slots 150S1 may be in a first end of the cross bus bar 150, and the slots 150S2 may be in a second end of the cross bus bar 150. The first and second ends of the cross bus bar 150 may be opposite to each other in the Y-axis direction.

The cross bus bar 150 may be connected to negative electrode leads 121N of some of the pouch type battery cells 121 of the battery assembly 120_5 and positive electrode leads 121P of some of the pouch type battery cells 121 of the battery assembly 120_6. The cross bus bar 150 may be in contact with negative electrode leads 121N of some of the pouch type battery cells 121 of the battery assembly 120_5 and positive electrode leads 121P of some of the pouch type battery cells 121 of the battery assembly 120_6. The cross bus bar 150 may be welded together with negative electrode leads 121N of some of the pouch type battery cells 121 of the battery assembly 120_5 and positive electrode leads 121P of some of the pouch type battery cells 121 of the battery assembly 120_6. The cross bus bar 150 may provide an electrical connection between negative electrode leads 121N of some of the pouch type battery cells 121 of the battery assembly 120_5 and positive electrode leads 121P of some of the pouch type battery cells 121 of the battery assembly 120_6.

In the case of a battery pack of the related art, each battery assembly includes one or two bus bar assemblies, thus increasing the mass of the battery pack and reducing the energy density and productivity of the battery pack. According to example embodiments, the bus bar assemblies 140_1 and 140_2 covering the plurality of battery assemblies 120_1 to 120_6 is provided to reduce the number of components of the battery pack 100 and the number of assembly processes. Accordingly, the energy density and productivity of the battery pack 100 can be improved.

### (Second Embodiment)

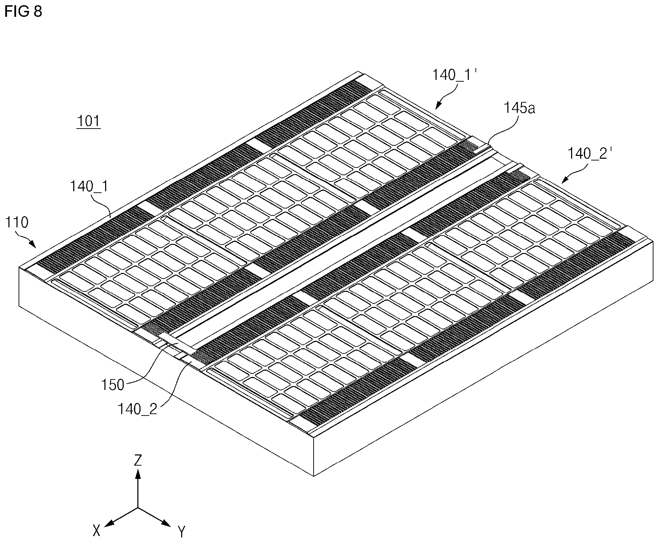

FIG. 8 is a perspective view for describing a battery pack 101 according to example embodiments.

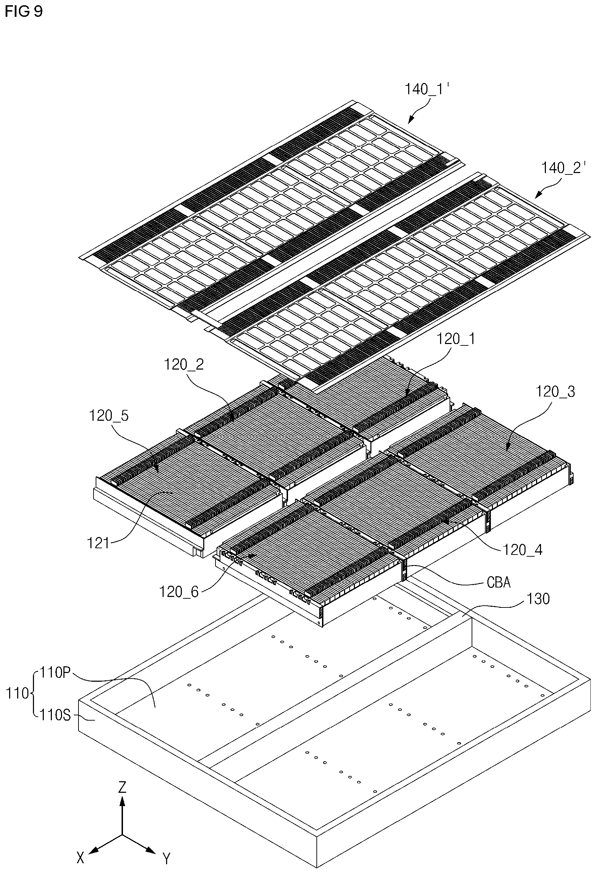

FIG. 9 is an exploded perspective view of the battery pack 101 of FIG. 8.

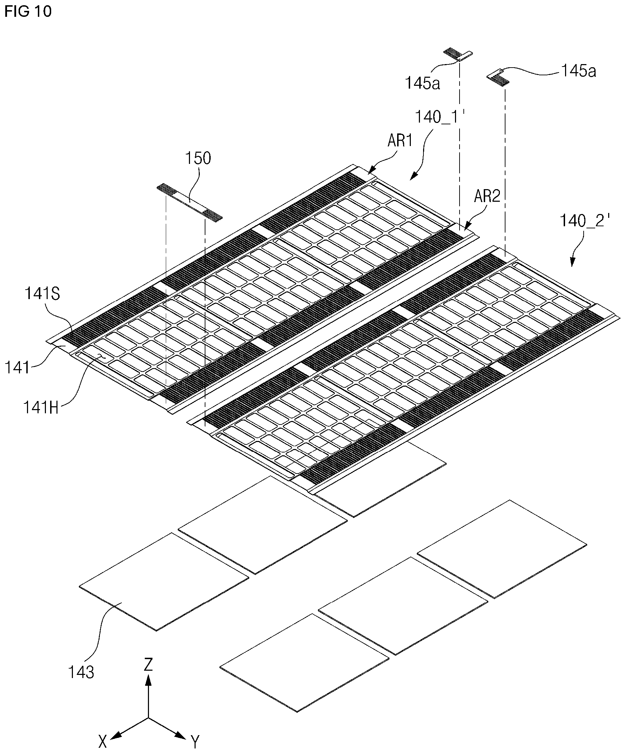

FIG. 10 is an exploded perspective view of bus bar assemblies 140_1' and 140_2' of FIG. 8.

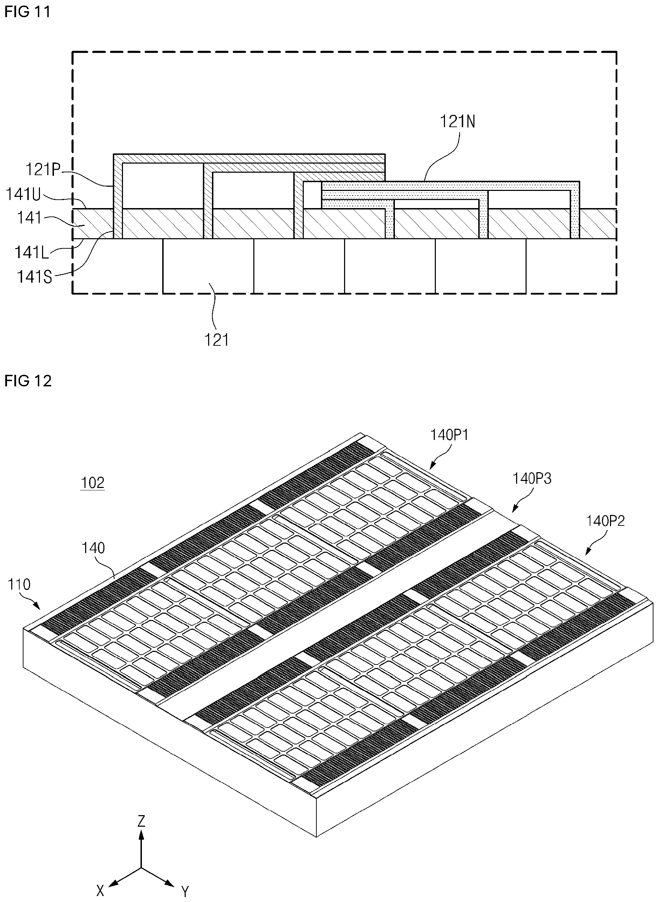

FIG. 11 illustrates a part of the battery pack 101 of FIG. 8 corresponding to FIG. 7.

Referring to FIGS. 8 to 11, the battery pack 101 may include a housing 110, a plurality of battery assemblies 120_1 to 120_6, a center beam 130, bus bar assemblies 140_1' and 140_2', and a cross bus bar 150. The housing 110 and the plurality of battery assemblies 120_1 to 120_6 of the battery pack 101 are substantially the same as those described above with reference to FIGS. 1 to 7 and thus redundant description thereof is omitted here.

Each of the bus bar assemblies 140_1' and 140_2' may include a bus bar frame 141, a plurality of fire-resistant sheets 143, and an inter-bus bar 145a. The bus bar frame 141, the plurality of fire-resistant sheets 143 and the inter-bus bar 145a are substantially the same as those described above with reference to FIGS. 4 to 7 and thus redundant description thereof is omitted here.

According to example embodiments, each of the bus bar assemblies 140_1' and 140_2' may not include inter-bus bars 145b and 145c, unlike the bus bar assemblies 140_1 and 140_2 of FIG. 4.

Accordingly, positive electrode leads 121P and negative electrode leads 121N of some of the pouch type battery cells 121 may be spaced apart from the inter-bus bar 145a. Positive electrode leads 121P and negative electrode leads 121N of some of the pouch type battery cells 121 may not be in contact with the inter-bus bar 145a.

The positive electrode leads 121P and the negative electrode leads 121N that are spaced from the inter-bus bar 145a may be welded together. Lowermost ones of the positive electrode leads 121P and the negative electrode leads 121N that are welded together may be in contact with an upper surface 141U of the bus bar frame 141. The upper surface 141U of the bus bar frame 141 may be opposite a lower surface 141L facing the plurality of pouch type battery cells 121. In contrast, in the battery pack 100 of FIG. 2, lowermost ones of the positive electrode leads 121P and the negative electrode leads 121N that are welded together may be welded to the inter-bus bar 145b as shown in FIG. 7.

According to example embodiments, the inter-bus bars 145b and 145c (see FIG. 4), excluding the inter-bus bars 145a that are external output terminals and the cross-bus bar 150 that should be relatively long, may be omitted. Accordingly, the number of components to be assembled to manufacture the battery pack 101 decreases, thus reducing manufacturing costs of the battery pack 101 and increasing the energy density of the battery pack 101.

### (Third Embodiment)

FIG. 12 is a perspective view of a battery pack 102 according to example embodiments.

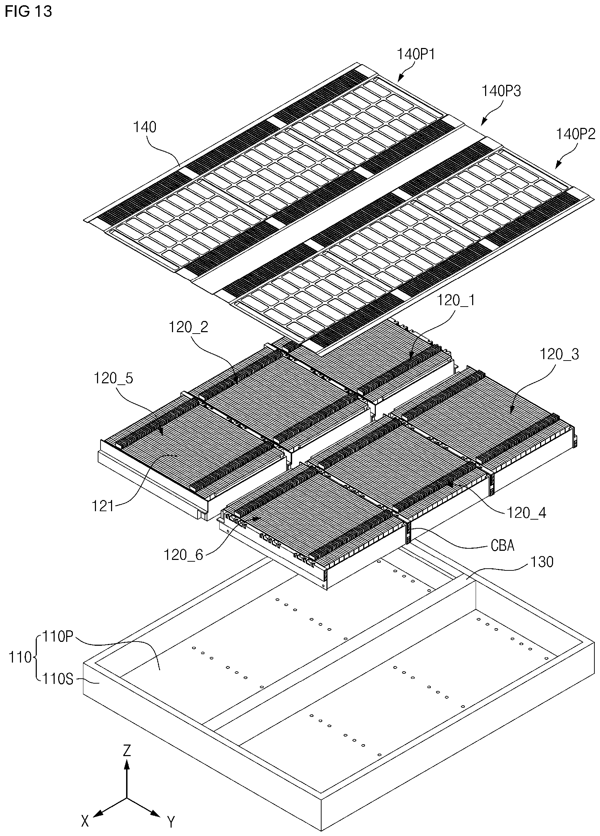

FIG. 13 is an exploded perspective view of the battery pack 102 of FIG. 12.

Referring to FIGS. 12 and 13, the battery pack 102 may include a housing 110, a plurality of battery assemblies 120_1 to 120_6, a center beam 130, a bus bar assembly 140, and a cross bus bar 150. The housing 110 and the plurality of battery assemblies 120_1 to 120_6 of the battery pack 102 are substantially the same as those described above with reference to FIGS. 1 to 7 and thus redundant description thereof is omitted here.

The bus bar assembly 140 may include a first portion 140P1 substantially the same as the bus bar assembly 140_1 of FIG. 4, a second portion 140P2 substantially the same as the bus bar assembly 140_2 of FIG. 4, and a third portion 140P3 connecting the first portion 140P1 and the second portion 140P2.

According to example embodiments, the bus bar assembly 140 may cover the plurality of battery assemblies 120_1 to 120_6. According to example embodiments, the bus bar assembly 140 may overlap the plurality of battery assemblies 120_1 to 120_6 in the Z-axis direction. According to example embodiments, the bus bar assembly 140 may cover the center beam 130. According to example embodiments, the bus bar assembly 140 may overlap the center beam 130 in the Z-axis direction.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a housing;
a first battery assembly and a second battery assembly both on the housing, each of the first and second battery assemblies including a plurality of pouch type battery cells; and
a bus bar assembly on the first and second battery assemblies,
wherein the bus bar assembly includes:
a bus bar frame configured to cover the first and second battery assemblies; and
a plurality of inter-bus bars on the bus bar frame.

2. The battery pack of claim 1, wherein each of the plurality of pouch type battery cells includes a pouch case, a positive electrode lead, and a negative electrode lead,
the pouch case includes a first side facing the housing and a second side opposite the first side,
the positive electrode lead and the negative electrode lead of each of the plurality of pouch type battery cells are on the second side, and
the positive electrode lead and the negative electrode lead of each of the plurality of pouch type battery cells are connected to a corresponding one of the plurality of inter-bus bars.

3. The battery pack of claim 2, wherein the positive electrode lead and the negative electrode lead of each of the plurality of pouch type battery cells are welded together with the corresponding one of the plurality of inter-bus bars.

4. The battery pack of claim 2, wherein the negative electrode lead of one of the plurality of pouch type battery cells is in contact with an upper surface of the corresponding one of the plurality of inter-bus bars.

5. The battery pack of claim 2, wherein the bus bar frame includes a plurality of lead slots, and
the positive electrode lead and the negative electrode lead of each of the plurality of pouch type battery cells pass through a corresponding one of the plurality of lead slots.

6. The battery pack of claim 1, wherein the bus bar assembly further includes a fire-resistant sheet between the first and second battery assemblies and the bus bar frame.

7. The battery pack of claim 6, wherein the bus bar frame includes a plurality of holes,
the fire-resistant sheet includes a plurality of cutting guides, and
each of the plurality of cutting guides overlaps a corresponding one of the plurality of holes.

8. A battery pack comprising:
a housing;
first to fourth battery assemblies on the housing, each of the first to fourth battery assemblies including a plurality of pouch type battery cells;
a center beam between the first and second battery assemblies and the third and fourth battery assemblies; and
a bus bar assembly on the first to fourth battery assemblies,
wherein the bus bar assembly includes a bus bar frame configured to cover the first to fourth battery assemblies.

9. The battery pack of claim 8, wherein the bus bar frame covers the center beam.

10. The battery pack of claim 8, wherein each of the plurality of pouch type battery cells includes a pouch case, a positive electrode lead, and a negative electrode lead,
wherein the pouch case includes a first side facing the housing and a second side opposite the first side, and
the positive electrode lead and the negative electrode lead of each of the plurality of pouch type battery cells are on the second side.

11. The battery pack of claim 10, wherein the bus bar assembly further includes a plurality of inter-bus bars on the bus bar frame, and
wherein the positive electrode lead and the negative electrode lead of each of the plurality of pouch type battery cells are connected to a corresponding one of the plurality of inter-bus bars.

12. The battery pack of claim 11, wherein the positive electrode lead and the negative electrode lead of each of the plurality of pouch type battery cells are welded together with the corresponding one of the plurality of inter-bus bars.

13. The battery pack of claim 11, wherein the positive electrode lead and the negative electrode lead of one of the plurality of pouch type battery cells are spaced apart from each of the plurality of inter-bus bars.

14. The battery pack of claim 11, wherein the negative electrode lead of one of the plurality of pouch type battery cells is in contact with upper surfaces of the plurality of inter-bus bars.
